# EUROPÄISCHE PATENTANMELDUNG

(11) **EP 2 348 330 A1**
(43) Veröffentlichungstag der Anmeldung: **27.07.2011**
(21) Anmeldenummer: 10150599.8
(22) Anmeldetag: 13.01.2010
(51) Int. Cl.: G01S 7/481, G01S 17/48, G01B 11/24

(54) **Liniensensor**

(71) Anmelder: Siemens Aktiengesellschaft, 80333 München (DE)
(72) Erfinder: Scheibner, Dirk, Dr., 90473 Nürnberg (DE); Thamm, Peter, Dr., 69469 Weinheim (DE); Völkel, Thomas, 90518 Altdorf (DE); Zettner, Jürgen, Dr., 90587 Veitsbronn (DE)

(57) **Zusammenfassung**

Erfindungsgemäß wird ein Liniensensor (1) zur berührungslosen Detektion eines Objekts (2) nach dem Triangulationsprinzip vorgeschlagen. Der Liniensensor (1) weist eine Projektionseinheit mit einer als Laserdiode ausgeführten Lichtquelle (3) und mit einem elektrostatisch anregbaren Kippspiegel (4) sowie einen Detektor (5) auf. Der Kippspiegel (4) dient dazu, einen von der Lichtquelle (3) empfangenen Laserstrahl (6) durch Bewegung zeitlich veränderlich entlang der Messlinie des Objekts (2) zu projizieren. Mit dem Detektor (5) wird die von der Projektionseinheit auf das Objekt (2) projizierte Messlinie aufgenommen.

## Beschreibung

Die Erfindung betrifft einen Liniensensor zur berührungslosen Detektion eines Objekts nach dem Triangulationsprinzip mit einer Projektionseinheit, die eine Lichtquelle umfasst, und mit einem Detektor, der zur Aufnahme einer von der Projektionseinheit auf das Objekt projizierten Messlinie dient.

Derartige Liniensensoren sind unter dem Begriff Lichtschnittsensoren bekannt. Mit ihnen können Oberflächenprofile von Objekten erfasst werden.

Dabei wird der punktförmige Laserstrahl einer Laserlichtquelle durch eine Zylinderlinse zu einer festen, nicht einstellbaren Linie aufgeweitet. Diese Linie wird auf das zu vermessende Objekt projiziert. Eine Kamera mit einem bestimmten Basisabstand zur Lichtquelle nimmt die Projektion der Linie auf das Objekt auf. Aus der Verzerrung und Verschiebung der Linie nach dem Triangulationsprinzip wird auf das Höhenprofil des Objekts rückgeschlossen.

Der Erfindung liegt daher die Aufgabe zugrunde, einen Liniensensor der oben genannten Art vorzuschlagen, der eine flexible Projektion der Messlinie ermöglicht.

Die Aufgabe wird mit den Merkmalen nach Anspruch 1 gelöst.

Dabei weist die Projektionseinheit mindestens einen Kippspiegel auf, der dazu dient, einen von der Lichtquelle empfangenen Lichtstrahl durch Bewegung zeitlich veränderlich entlang der Messlinie des Objekts zu projizieren.

Eine vorteilhafte Weiterbildung des Liniensensors besteht, wenn gemäß Anspruch 2 der Kippspiegels als mikroelektromechanischer Kippspiegel ausgeführt ist.

Außerdem ist es vorteilhaft, wenn gemäß Anspruch 3 der mikroelektromechanische Kippspiegel einen elektrostatischen Antrieb aufweist.

Eine weitere vorteilhafte Weiterbildung des Liniensensors besteht, wenn gemäß Anspruch 4 die Lichtquelle als Laserdiode ausgeführt ist.

Weiterhin ist es vorteilhaft, wenn gemäß Anspruch 5 der Detektor als Photozeilendetektor ausgeführt ist.

Eine weitere sehr vorteilhafte Ausführungsform besteht, wenn gemäß Anspruch 6 Mittel vorgesehen sind, mit denen die Lichtquelle synchronisiert mit der Stellung des Kippspiegels ein- und ausschaltbar ist. Hierdurch ist auf einfache Weise die Länge der Messlinie einstellbar. Außerdem können hiermit Muster oder Einrichtmarken dargestellt werden.

Sind gemäß Anspruch 7 Mittel vorgesehen, mit denen der Kippspiegel mit der Eigenfrequenz des Torsionsmodes anregbar ist, können hiermit große Kippwinkel erzielt werden.

Ein Ausführungsbeispiel der Erfindung wird im Folgenden anhand einer Zeichnung näher erläutert. Es zeigen:
FIG 1 den grundsätzlichen Aufbau eines erfindungsgemäßen Liniensensors und
FIG 2 den grundsätzlichen Aufbau eines mikroelektromechanischen Kippspiegels.

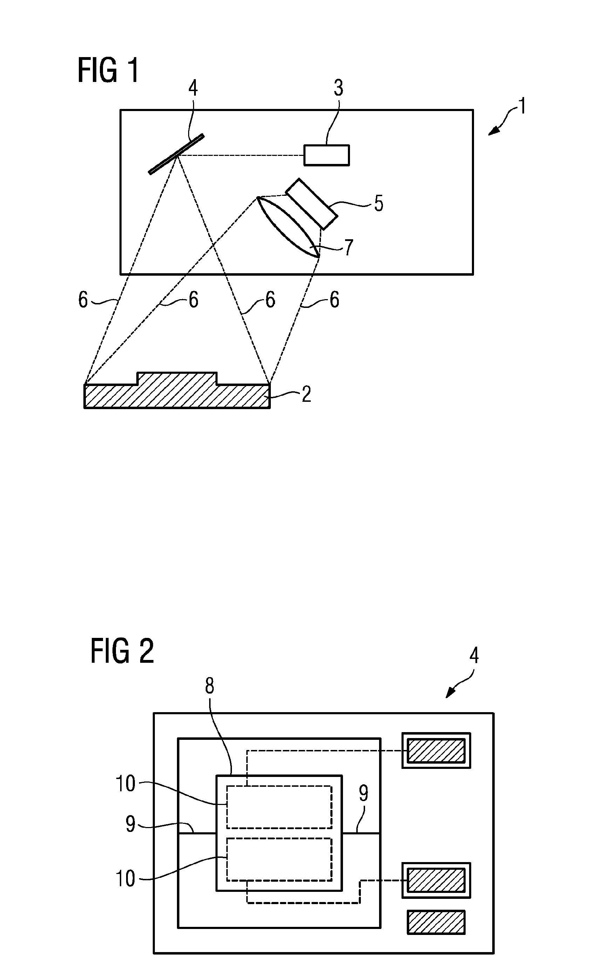

In FIG 1 ist der Aufbau eines erfindungsgemäßen Liniensensors 1 zur berührungslosen Detektion eines Objekts 2 nach dem Triangulationsprinzip dargestellt. Der Liniensensor 1 weist eine Projektionseinheit mit einer Lichtquelle 3 und mit einem Kippspiegel 4 sowie einen Detektor 5 auf. Die Lichtquelle 3 ist in diesem Ausführungsbeispiel als Laserdiode ausgeführt. Der Kippspiegel 4 ist hier ein mikroelektromechanischer Kippspiegel mit einem elektrostatischen Antrieb. Durch diesen wird der Kippspiegel 4 elektrostatisch angeregt, so dass ein von der Lichtquelle 3 empfangener Laserstrahl 6 zeitlich veränderlich entlang einer Messlinie des Objekts 2 projiziert wird. Der von dem Objekt 2 reflektierte Laserstrahl 6 wird von dem Detektor 5, z.B. einem Photozeilendetektor, empfangen und in bekannter Weise nach dem Triangulationsprinzip ausgewertet. Aufgrund der Bewegung des Kippspiegels 4 und der sich dadurch ergebenden Linienprojektion werden die Punkte des Objekts 2 entlang der gegebenen Messlinie im Detektor 5 abgebildet. Hierdurch ist es möglich auch das Höhenprofil des Objekts 2 zu erfassen.

Auf dem Weg des Strahlungsganges vom Objekt 2 zum Detektor 5 ist ein optisches Abbildungselement vorgesehen.

Im Prinzip arbeitet der erfindungsgemäße Liniensensor 1 wie ein Lichtschnittsensor, jedoch mit dem Unterschied, dass ein Lichtschnittsensor aufgrund der Linienprojektion die Objektpunkte auf einmal als Bildpunkte abbildet, während beim Liniensensor 1 die Objektpunkte einzeln zeitlich nacheinander erfasst werden und die dazugehörige Abbildung in Bildpunkten ebenfalls nacheinander erfolgt.

Gegenüber dem bekannten Lichtschnittsensor mit fester Linienprojektion hat der erfindungsgemäße Liniensensor 1 folgende Vorteile:
- Die Flexibilität der Projektion der Messlinie bzw. des Messmusters ermöglicht z.B. eine Längeneinstellung der Messlinie bzw. die Projektion von Einrichtmarken;
- die Messlinie kann in störenden Bereichen, z.B. in spiegelnden Abschnitten, unterbrochen werden;
- bei 2D-Projektion ist eine Verschiebung der Messlinie möglich, was eine 3D-Messung ermöglicht und eine Erweiterung zur Streifenprojektion;
- bei Verwendung des Flying Spot Prinzips ist die Tiefenschärfe nicht begrenzt und eine Reduktion des Empfangs auf einen Photozeilendetektor, z.B. PSD (Position Sensitive Device), möglich;
- teure, aufeinander justierte optische Komponenten sind nicht erforderlich. Stattdessen kann eine kostengünstige Projektionseinheit eingesetzt werden;
- im Vergleich zur Zylinderlinse lässt sich eine wesentlich exaktere Messlinie ohne Abbildungsfehler erzielen.

Im Liniensensor 1 können Mittel vorgesehen sein, mit denen die Lichtquelle 3 synchronisiert mit der Stellung des Kippspiegels 4 ein- und ausschaltbar ist. Auf diese Weise ist die Länge der Messlinie einstellbar. Weitere Mittel können zur Anregung des Kippspiegels 4 mit der Eigenfrequenz des Torsionsmodes vorhanden sein. In diesem Fall lassen sich deutlich größere Kippwinkel erzielen.

FIG 2 zeigt die Ausführung eines mikroelektromechanischen Kippspiegels mit elektrostatischem Antrieb. Der Kippspiegel ist aus zwei Silizium-Wafern hergestellt, wobei der obere Wafer eine Spiegelplatte 8 und die Federaufhängung 9 und der untere Wafer die Ansteuerelektroden 10 enthält. Die Spiegelplatte 8 ist elektrostatisch über die zwei Ansteuerelektroden 10 um eine Achse kippbar. Die Anregung kann statisch weit unterhalb der Resonanzfrequenz oder aber mit der Eigenfrequenz des Torsionsmodes erfolgen.

## Patentansprüche

1. Liniensensor (1) zur berührungslosen Detektion eines Objekts (2) nach dem Triangulationsprinzip mit einer Projektionseinheit, die eine Lichtquelle (3) umfasst, und mit einem Detektor (5), der zur Aufnahme einer von der Projektionseinheit auf das Objekt (2) projizierten Messlinie dient, **dadurch gekennzeichnet, dass** die Projektionseinheit mindestens einen Kippspiegel (4) aufweist, der dazu dient, einen von der Lichtquelle (3) empfangenen Lichtstrahl durch Bewegung zeitlich veränderlich entlang der Messlinie des Objekts (2) zu projizieren.

2. Liniensensor nach Anspruch 1, **dadurch gekennzeichnet, dass** der Kippspiegel (4) als mikroelektromechanischer Kippspiegel ausgeführt ist.

3. Liniensensor nach Anspruch 2, **dadurch gekennzeichnet, dass** der mikroelektromechanische Kippspiegel einen elektrostatischen Antrieb aufweist.

4. Liniensensor nach einem der vorangehenden Ansprüche, **dadurch gekennzeichnet, dass** die Lichtquelle (3) als Laserdiode ausgeführt ist.

5. Liniensensor nach einem der vorangehenden Ansprüche, **dadurch gekennzeichnet, dass** der Detektor (5) als Photozeilendetektor ausgeführt ist.

6. Liniensensor nach einem der vorangehenden Ansprüche, **dadurch gekennzeichnet, dass** Mittel vorgesehen sind, mit denen die Lichtquelle (3) synchronisiert mit der Stellung des Kippspiegels (4) ein- und ausschaltbar ist.

7. Liniensensor nach einem der vorangehenden Ansprüche, **dadurch gekennzeichnet, dass** Mittel vorgesehen sind, mit denen der Kippspiegel (4) mit der Eigenfrequenz des Torsionsmodes anregbar ist.
